# EUROPÄISCHE PATENTANMELDUNG

(11) **EP 1 164 549 A2**
(43) Veröffentlichungstag der Anmeldung: **19.12.2001**
(21) Anmeldenummer: 01110927.9
(22) Anmeldetag: 05.05.2001
(51) Int. Cl.: G06T 9/00

(54) **Verfahren und Anordnung zur Kodierung von Livebildern in der Mikroskopie**

(30) Priorität: 27.05.2000 DE 10026392
(71) Anmelder: Leica Microsystems Wetzlar GmbH, 35578 Wetzlar (DE)
(72) Erfinder: Fiedler, Frank, 35578 Wetzlar (DE)
(74) Vertreter: Reichert, Werner F., Dr.

(57) **Zusammenfassung**

Das Verfahren zur Kodierung von Livebildern in der Mikroskopie ermöglicht die Aufnahme g eines ersten Vollbildes (25₁), das einen Ausschnitt aus einem mikroskopischen Präparat (14a) darstellt. Daraus wird ein erstes kodiertes Vollbild (200) erzeugt, das in einem Zwischenspeicher (27) abgelegt wird. Ferner kann das erste kodierten Vollbildes (25₁) z.B. auf einem Monitor ausgegeben werden. Bei der Aufnahme eines zweiten Vollbildes (25₂) wird lediglich ein Teil bearbeitet und übertragen. Dieser teil entspricht dem Verstatz eines X/Y-Tisches (12). Die Koordinaten des Ausschnitts des zweiten Vollbildes (25₂) und weitere Steuerdaten werden an einen Steuerdatendekoder (26) übergeben. Einentsprechendes zusammengesetztes und kodiertes Vollbild (210) wird in einem Bild-Zusammensetzer (32) erzeugt, wobei das mindestens eine kodierte Teilbild (220) und das im Zwischenspeicher (27) befindliche vorangegangene kodierte Vollbild verwendet werden.

## Beschreibung

Die Erfindung betrifft ein Verfahren zur Kodierung von Livebildern in der Mikroskopie. Im Besonderen betrifft die Erfindung ein Verfahren, bei dem die aufgenommenen Mikroskopiebilder teilweise kodiert werden. Die Verschiebung des X/Y-Tisches induziert einen Versatz eines Teils des zuvor aufgenommenen Bildes, es reicht aus, wenn nur der neue Bildteil kodiert und übertragen wird.

Ferner betrifft die Erfindung eine Anordnung zur Kodierung von Livebildern in der Mikroskopie. Im Besonderen betrifft die Erfindung ein System, das die Übertragung von Mikroskopiebildern von einem Mikroskop zu einer entfernten Station hinsichtlich der übertragenen Bildqualität verbessert.

Bei der bisher, aktuell praktizierten Videokodierung werden innerhalb der Codecs Algorithmen zur Erkennung von Bildveränderungen benutzt, um die zu komprimierenden Bildteile zu finden. Die benötigte Rechenzeit zum Auffinden solcher Bildveränderungen (Person hat den Kopf bewegt etc. ) ist relativ hoch und limitiert (neben der Übertragungsbandbreite) die Anzahl verarbeitbarer Bewegtbilder pro Sekunde.

Das Patent US-A-5,216,596 offenbart ein Telepathologie-System. Eine Arbeitsstation ist an einem entfernten Ort aufgestellt und empfängt Bilder von einem Präparat (Gewebe), das mit einem Mikroskop untersucht werden soll. Die mikroskopischen Bilder werden mit einer herkömmlichen Videokamera aufgenommen und an dem entfernten Ort auf einem herkömmlichen Videomonitor dargestellt. Es erfolgt nach der Bildaufnahme eine Digitalisierung oder eine Kodierung der Bilddaten. Das hier vorgestellte System ist an analoge Übertragungsstrecken gebunden und kann in einem herkömmlichen digitalen Netzwerk nicht die benötigte Auflösung erreichen. Ferner ist aufgrund der analogen Übertragung eine Kodierung ausgeschlossen.

Eine Aufgabe der Erfindung ist es, ein Verfahren zu schaffen, mit dem eine Erhöhung der Video-Bildrate und eine Reduzierung des Kompressionsaufwandes bei der Übertragung von Mikroskop-Livebildern über digitale Netzwerke erreicht wird. Weiterhin soll es mit dem Verfahren möglich sein, die Darstellungsqualität zu erhöhen, d.h. Flimmereffekte durch die ständige Bildübertragung auch bei stehenden Bildern zu verhindern.

Dies wird erfindungsgemäß gelöst durch ein Verfahren, das durch die folgenden Schritte gekennzeichnet ist:
a) Aufnehmen eines ersten Vollbildes, das einen Ausschnitt aus einem mikroskopischen Präparat darstellt;
b) Erzeugen eines ersten kodierten Vollbildes in einem Kodierelement;
c) Speichern des ersten kodierten Vollbildes in einem Zwischenspeicher;
d) Ausgeben des ersten kodierten Vollbildes
e) Aufnehmen eines zweiten Vollbildes, das bezüglich des vorangegangenen Vollbildes in einer durch einen X/Y-Tisch definierten Ebene versetzt ist;
f) Übergeben der Koordinaten des Ausschnitts des zweiten Vollbildes und weiterer Steuerdaten an einen Steuerdatendekoder;
g) Erzeugen von mindestens einem kodierten Teilbild unter Heranziehung der Daten vom Steuerdatendekoder;
h) Erzeugen eines zusammengesetzten und kodierten Vollbildes in einem Bild-Zusammensetzer, wobei das mindestens ein kodiertes Teilbild und das im Zwischenspeicher befindliche vorangegangene kodierte Vollbild verwendet werden;
i) Ausgeben eines zweiten zusammengesetzten und kodierten Vollbildes, wobei das zusammengesetzte und kodierte Vollbild dazu auch im Zwischenspeicher abgelegt wird; und
j) Aufnehmen weiterer Bilder, wobei für jedes weitere Bild die Schritte f bis i wiederholt werden.

Eine weitere Aufgabe der Erfindung ist es, eine Anordnung zu schaffen, bei der eine flimmerfreie Bildübertragung von Mikroskop-Livebildern bei einer erhöhten Bildrate ermöglicht ist.

Dies wird erfindungsgemäß gelöst durch eine Anordnung, die gekennzeichnet ist durch einen Kodierer, an dem Vollbilder übergebbar sind, wobei der Kodierer aus einer Kodiereinheit besteht, die mit einem Zwischenspeicher verbunden ist. Ein Steuerdatendekoder ist mit der Kodiereinheit, dem Zwischenspeicher und einem Bild-Zusammensetzer verbunden, und der Bild-Zusammensetzer empfängt Daten von dem Zwischenspeicher und übergibt Daten an den Zwischenspeicher.

Ein Vorteil der Erfindung ist eine Erhöhung der Video-Bildrate und eine Reduzierung des Kompressionsaufwandes bei der Übertragung von Mikroskop-Livebildern über digitale Netzwerke. Außerdem wird die Darstellungsqualität erhöht, d.h. Flimmereffekte durch die ständige Bildübertragung auch bei stehenden Bildern oder Flimmern durch ständiges Komprimieren wird verhindert. Die Kompression der Bildaten wird mit mehreren, marktüblichen Algorithmen durchgeführt, um die bestehenden Standards bei der Videokompression beizubehalten.

Ein weiterer Vorteil der Erfindung ist, dass bei dem erfindungsgemäßen Kodier/Dekodier-Alorithmus der Umstand berücksichtigt ist, dass zur Video-Kodierung von Bewegtbildern bzw. Livebildern von einem Mikroskop die Statusinformation eines automatischen Mikroskops herangezogen werden. Bei mikroskopischen Untersuchungen treten keine unerwarteten Bewegungen innerhalb des Bildes auf. Die Bewegungen der Probe bzw. des Prärparats sind in der Regel nur Verschiebungen in den drei Raumkoordianten X, Y und Z. Mit Hilfe dieser Zusatzinformationen kann die Kodierungszeit des zu übertragenden Bildes erheblich verkürzt werden, die Datenmenge wird reduziert und es wird eine höhere Bewegtbildrate oder eine bessere Bildqualität (durch weniger starke Kompression) erreicht. Der hier verwendete Algorithmus benutzt zusätzliche Eingabedaten, d.h. neben den Bilddaten werden zusätzlich ein Steuer- und zwei Datenkanäle mit Zusatzinformation als Input für den Kodierer verwendet. Der Steuerkanal enthält Information zur Steuerung der partiellen Kodierung des Eingabebildes. Die dazu benötigten Daten (z.B. X-/Y-Position, Farbwerte etc.) werden über die zwei zusätzlichen Datenkanäle zugeführt.

In der Zeichnung ist der Erfindungsgegenstand schematisch dargestellt und wird anhand der Figuren nachfolgend beschrieben. Dabei zeigen:
- Fig. 1: eine systematische Darstellung eines Systems, bei dem die Erfindung Verwendung findet,
- Fig. 2: eine schematische Darstellung der Bildaufnahme eines Präparats, wobei die Position des X/Y-Tisches in der X-Position geändert wurde,
- Fig. 3: eine schematische Darstellung der Bildaufnahme eines Präparats, wobei die Position des X/Y-Tisches in der Y-Position geändert wurde,
- Fig. 4: eine schematische Darstellung der Bildaufnahme eines Präparats, wobei die Position des X/Y-Tisches in der X-Position und der Y-Position geändert wurde,
- Fig. 5: einen schematischer Aufbau eines Kodierers, und
- Fig. 6: einen schematischen Aufbau eines Dekoders.

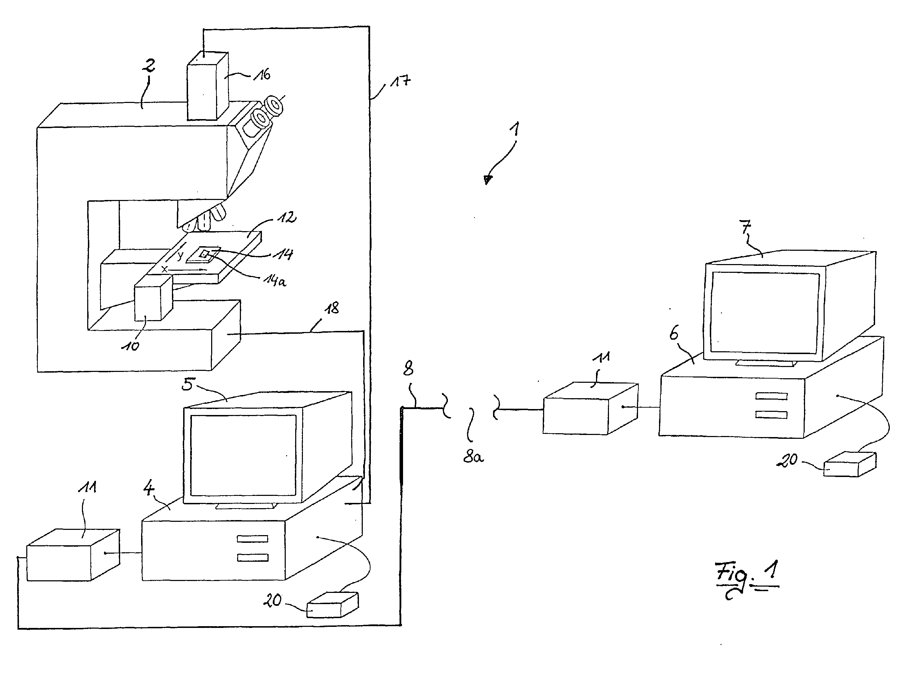

Das in Fig. 1 dargestellte System 1 besteht aus einem Mikroskop 2, das an einem Ort aufgestellt ist, an dem die zu untersuchenden Präparate (Gewebeschnitte) hergestellt werden. Der Ort ist in der Regel eine histologische oder pathologische Abteilung eines Krankenhauses. Dem Mikroskop 2 ist ein erster Rechner 4 mit einem Bildschirm 5 zugeordnet. Ein zweiter Rechner 6, ebenfalls mit einem Bildschirm 7, ist mit dem ersten Rechner 4 über ein herkömmliches Netzwerk 8 verbunden. In Fig. 1 ist das Netzwerk durch eine Verbindungsleitung dargestellt, die eine unterbrochene Stelle 8a besitzt, um besser zu verdeutlichen, dass der zweite Rechner 6 im Prinzip beliebig weit von dem ersten Rechner 4 installiert sein kann.

In dem hier dargestellten Ausführungsbeispiel ist das Mikroskop 2 als ein automatisches Mikroskop dargestellt. Alle Abbildungsparameter des Mikroskops 2 können z.B. von dem zweiten Rechner 6 aus eingestellt und verändert werden. In diesem Falle besitzt das Mikroskop 2 entsprechende Motoren zur Einstellung der Parameter. In Fig. 1 ist ein Motor 10 dargestellt, der das Verschieben eines X/Y-Tisches 12 ermöglicht. Motoren für Veränderung des Abbildungsmaßstabes, das Verfahren des X/Y-Tisches 12 in Z-Richtung und/oder zur Fokussierung sind aus Gründen der Übersichtlichkeit nicht dargestellt. Für einen Fachmann ist jedoch die Anordnung und Verwendung dieser Motoren klar. Der erste Rechner 4 dient in der Regel dazu, um die Bilddaten vom Mikroskop 2 aufzunehmen und für den Transfer über das Netzwerk 8 in ein entsprechendes Datenformat zu bringen. Ferner kann vom ersten Rechner 4 auch eine Kompression der Bilddaten durchgeführt werden. Hinzu kommt, dass das Mikroskop 2 ebenfalls mit Positionsgebern (nicht dargestellt) ausgestattet ist, die an den ersten Rechner 4 Signale liefern, die über die X-, Y- und Z-Position des X/Y-Tisches 12 Information liefern. Es ist ebenso denkbar, dass der X/Y Tisch 12 oder Einzelkomponenten des Mikroskops Signale liefern, die eine Ermittlung der Position ermöglichen. Ferner ist der erste Rechner 4 auch für den Empfang der Daten vom zweiten Rechner 6 für die Steuerung des Mikroskops 2 sowie deren Umsetzung in entsprechende Steuersignale zuständig. Der erste und der zweite Rechner 4 und 6 werden für die Kommunikation über das Netzwerk 8 benutzt, wobei unter Kommunikation der Datentransfer in beiden Richtungen zu verstehen ist.

Auf dem X/Y-Tisch 12 ist ein Objektträger 14 mit einem darauf präparierten Präparat 14a. Entsprechend der gewählten Vergrößerung wird ein Bildfenster (nicht dargestellt) abgebildet und von einer Kamera 16 aufgenommen. Die Kamera 16 kann z.B. als herkömmliche Video-Kamera oder CCD-Kamera ausgestaltet sein. Die Kamera 16 ist über eine Verbindung 17 mit dem ersten Rechner 4 verbunden. Zwischen den ersten Rechner 4 und dem Mikroskop 2 besteht eine weitere Verbindung 18, über die Steuersignale an die entsprechenden Motoren gesendet werden. Die Steuersignale werden über das Netzwerk 8 von dem zweiten Rechner 6 an den ersten Rechner 4 übermittelt. Ebenso werden über das Netzwerk 8 die Bilddaten vom ersten Rechner 4 an den zweiten Rechner 6 übermittelt. Beide Rechner 4 und 6 können jeweils mit einem WAN-Modul 11 (ISDN, ASDL, ATM, Satellit) versehen sein, das zum Verbindungsaufbau dient. Ferner ist mit jedem Rechner 4 und 6 eine Eingabeeinheit 20 für Benutzereingaben verbunden. Die Eingabeeinheit 20, kann als Maus, Tastatur oder als Sprachsteuereinheit ausgebildet sein.

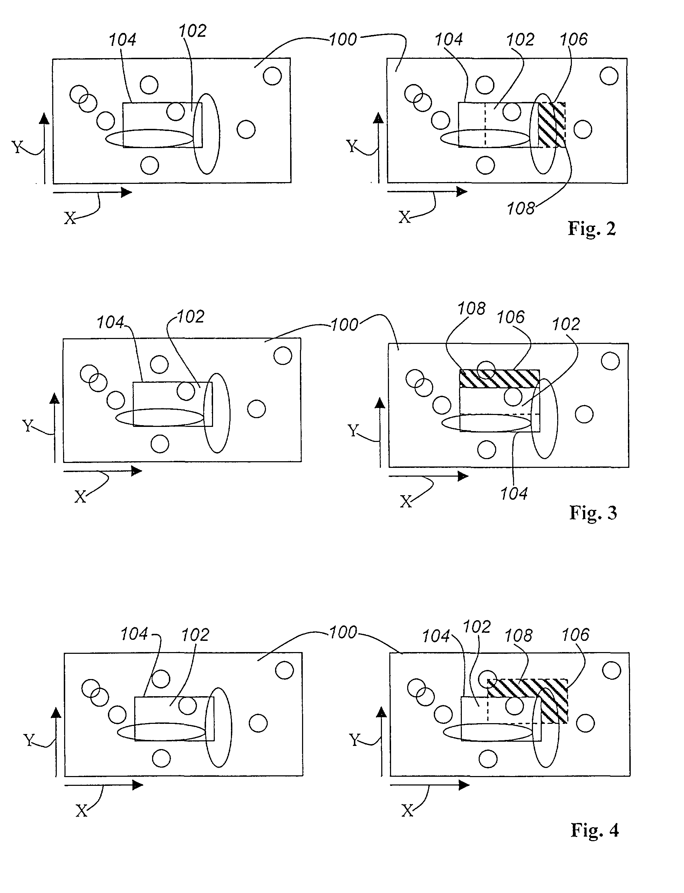

Die Fign. 2 bis 4 verdeutlichen die Bildaufnahme eines Teils eines Gewebeschnitts 100. Ein erstes Bild 102 wird von einer Videokamera oder einer CCD-Kamera aufgenommen. Die Kamera definiert einen ersten Aufnahmerahmen 104, der in den Fign. 2 bis 4 mit durchgezogenen Linien dargestellt ist. Der X/Y-Tisch 12 (siehe Fig. 1) ist in X-Richtung verfahren, und daraus resultiert ein versetzter Aufnahmerahmen 106, der in Fig. 2 durch gestrichelte Linien dargestellt ist. Der Unterschied zwischen dem ersten Aufnahmerahmen 104 und dem versetzten Aufnahmerahmen 106 besteht in einer schraffierten Fläche 108.

In Fig. 3 ist der X/Y-Tisch in Y-Richtung verfahren und daraus resultiert ein versetzter Aufnahmerahmen 106, der in Fig. 3 ebenfalls durch gestrichelte Linien dargestellt ist. Der Unterschied zwischen dem ersten Aufnahmerahmen 104 und dem versetzten Aufnahmerahmen 106 besteht ebenfalls in einer schraffierten Fläche 108.

In Fig. 4 ist der X/Y-Tisch in X-Richtung und in Y-Richtung verfahren und daraus resultiert ein versetzter Aufnahmerahmen 106, der in Fig. 4 ebenfalls durch gestrichelte Linien dargestellt ist. Der Unterschied zwischen dem ersten Aufnahmerahmen 104 und dem versetzten Aufnahmerahmen 106 besteht in einer schraffierten Fläche 108.

Weiterhin muß die Anordnung vergleichen, ob das aufgenommene Bild eine Veränderung in Z-Richtung ausgeführt hat. Hinzu kommt, dass dann ebenfalls Änderungen des Bildinhalts erfasst werden müssen, bei denen das neue Bild einen Bereich umfasst, der völlig außerhalb des Bereichs des Vorgängerbildes ist. Hierzu stehen geeignete Verarbeitungs- bzw. Ermittlungsmethoden zur Verfügung.

Um die Übertragung der aufgenommenen mikroskopischen Bilder an eine entfernte Station zu verbessern bzw. die Übertragungsgeschwindigkeit zu steigern, genügt es lediglich den Teil des Bildes zu übertragen, der sich auf Grund des Versatzes durch den X/Y-Tisch 12 ergibt. Wie aus den Fign. 2 bis 4 ersichtlich, braucht für ein Vollbild auf der Empfängerseite nur die schraffierte Fläche 108 des versetzten Aufnahmerahmens 106 übertragen werden.

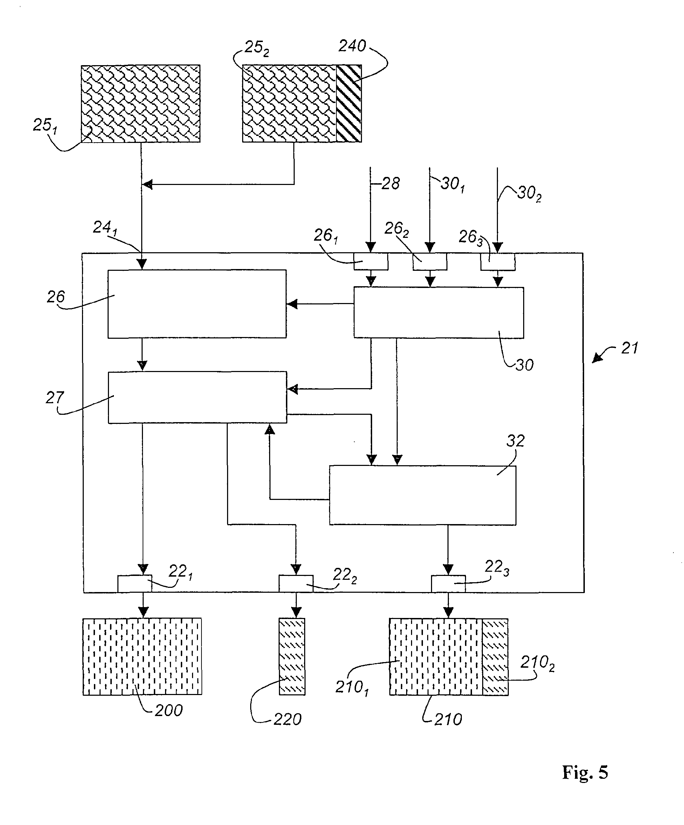

Für die Vorbereitung der Bildübertragung ist in Fig. 5 ein schematischer Aufbau eines Kodierers 21 dargestellt. Zu Beginn der Kodierung muss die Bild-Ausgabeart festgelegt werden. Der Kodierer 21 besitzt in diesem Ausführungsbeispiel drei Ausgänge. An einem ersten Ausgang 22₁ wird ein kodiertes Vollbild 200 ausgegeben, das vollständig kodiert ist. An einem zweiten Ausgang 22₂ wird ein kodiertes Teilbild 220 ausgegeben, das partiell kodiert ist. An einem dritten Ausgang 22₃ wird ein zusammengesetztes und kodiertes Vollbild 210 ausgegeben, das aus mehreren Teilbildern 210₁ und 210₂ besteht. Jedes der Teilbilder 210₁ und 210₂ ist partiell kodiert und in entsprechender Weise zu einem kodierten Vollbild 210 zusammengesetzt. Der Kodierer 21 besitzt weiterhin 4 Eingänge. Über einen ersten Eingang 24₁ werden die Bilddaten des Eingangsbildes, eines ersten Vollbildes 25₁, an den Kodierer 21 übergeben. Das erste Vollbild 25₁ kann z.B. über eine Videokamera oder eine CCD-Kamera (nicht dargestellt) aufgenommen werden.

Das erste aufgenommene Vollbild 25₁, wird einem Kodierelement 26 übergeben und immer vollständig kodiert. Anschließend wird das kodierte Bild in einem Zwischenspeicher 27 abgelegt. Ein Vollbild kann am ersten Ausgang 22₁ ausgegeben werden. Wird z.B. der X/Y-Tisch 12 verfahren, wird erneut ein zweites Vollbild 25₂ aufgenommen. In dem hier beschriebenen Beispiel unterscheidet sich das zweite aufgenommene Vollbild 25₂ vom ersten aufgenommenen Vollbild 25₁ durch eine schraffierte Fläche 240. Das zweite aufgenommene Vollbild 25₂ wird ebenfalls dem Kodierelement 26 zugeführt. Mit allen weiteren aufgenommenen Bildern wird in gleicher Weise verfahren.

Der Kodierer 21 besitzt einen Steuerdatendekoder 30, der drei Eingänge aufweist. Ein erster Eingang 26₁ ist mit einem Steuerkanal 28 verbunden, der Informationen zur Steuerung der partiellen Kodierung des Eingangsbildes liefert. Ein erster Datenkanal 30₁ ist mit einem zweiten Eingang 26₂ und ein zweiter Datenkanal 30₂ ist mit einem dritten Eingang 26₃ verbunden. Der erste und zweite Datenkanal 30₁ und 30₂ liefern, z.B. Informationen über die x/y-Position des X/Y-Tisches, die Farbwerte oder ähnliches. Bilder, die nach dem ersten aufgenommenen Vollbild 25₁ aufgenommen werden, werden in Abhängigkeit von der Information vom Steuerdatendekoder 30 partiell oder vollständig kodiert.

Ferner besitzt der Kodierer 21 einen Bild-Zusammensetzer 32, der ebenfalls Information vom Steuerdatendekoder 30 empfängt, um die kodierten Teilbilder 210₁ und 210₂ zu einem kodierten Vollbild 210 zusammen zu setzen. Die Zusammensetzung von kodierten Teilbildern 210₁ und 210₂ zu einem Vollbild 210 ist dann erforderlich, wenn sich wie in Fig. 5 dargestellt, das erste aufgenommene Vollbild 25₁ und das nachfolgend aufgenommene Vollbild 25₂ z.B. um die schraffierte Fläche 240 unterscheiden. Ebenso wird eine Information vom Steuerdatendekoder 26 an den Zwischenspeicher 27 geleitet, damit die zu Zusammensetzung eines Vollbildes benötigte Bildinformation an den Bild-Zusammensetzer 32 geleitet wird. Nachdem aus den kodierten Teilbildern 210₁ und 210₂ ein Vollbild 210 erzeugt ist, kann es über den dritten Ausgang 22₃ ausgegeben werden. Zusätzlich wird das neu erzeugte Vollbild 210 im Zwischenspeicher 27 abgelegt und bildet somit eine Grundlage für die mögliche Zusammensetzung eines neu aufgenommenen Eingangsbildes.

Neben den reinen Bildinformationen enthält ein kodiertes Vollbild 210 oder Teilbild 220 zusätzlich Information zur Art der Kodierung (vollständig/partiell) und im Fall der teilkodierten Bilder die Information zur Lage des Bildes im Gesamtbild.

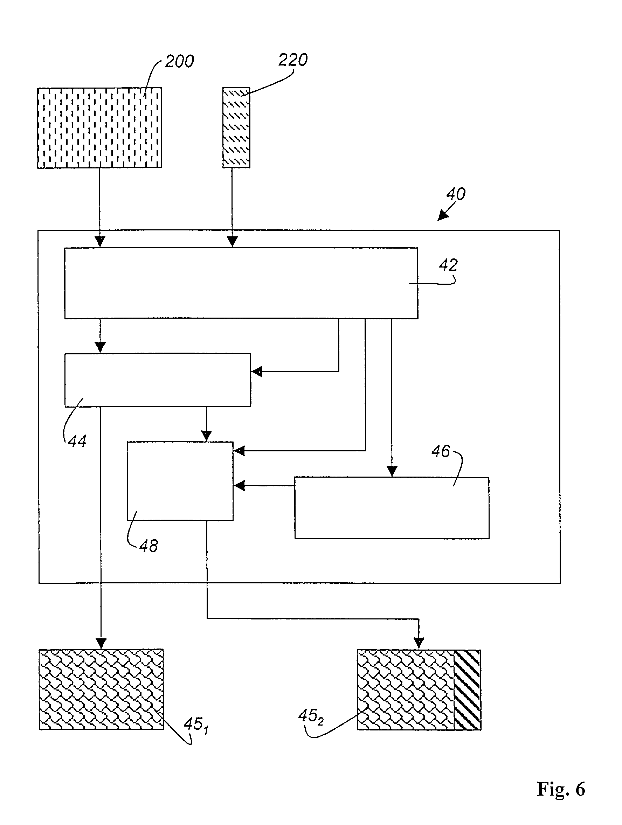

Fig. 6 zeigt einen schematischen Aufbau eines Dekoders 40. Wie bereits oben erwähnt, sind die Eingangsbilder für den Dekoder 40 das kodierte Vollbild 200 oder das kodierte Teilbild 220 aus Fig.5. Diese Bilder enthalten neben der reinen Bildinformation auch Information zur Art der Kodierung (Vollbild 200 /Teilbild 220). Im Fall der partiell kodierten Bilder werden zusätzlich Informationen zur Position des Teilbildes im Gesamtbild als Eingabedaten ausgewertet. Wie bereits bei der Kodierung erwähnt, ist das erste übertragene Bild ein Vollbild 200.

Der Dekoder 40 besitzt einen Steuerdatendekoder 42, der die entsprechenden Positions- und/oder Steuerdaten aus dem empfangenen Vollbild 200 oder Teilbild 220 ermittelt. Wie bereits in Fig. 5 erwähnt wird als erstes Bild immer ein Vollbild 200 aufgenommen und aus dem Kodierer 21 als kodiertes Vollbild 200 ausgegeben. Beim Dekoder 40 wird in entsprechender Weise verfahren. Der Steuerdatendekoder 42 empfängt das kodierte Vollbild 200 und leitet es an eine Dekodereinheit 44 weiter. Das kodierte Vollbild 200 wird in eine dekodiertes Vollbild 45₁ umgesetzt und ausgegeben. Das dekodierte Vollbild 45₁ entspricht dem ersten aufgenommene Vollbild 25₁ vor der Kodierung. Das erste dekodierte Vollbild 45₁ wird zusätzlich im Dekoder-Zwischenspeicher 46 abgelegt. Mit allen weiteren Vollbildern wird ebenso verfahren: dekodieren - zwischenspeichern - ausgeben.

Kodierte Teilbilder 220 werden ebenfalls dem Steuerdatendekoder 42 übergeben und dekodiert und danach in Abhängigkeit von den Zusatzinformationen (Position im Gesamtbild, etc.) in einem Bild-Zusammensetzer 48 mit dem Vorgängerbild zu einem dekodierten Vollbild 45₂ verknüpft. Dieses Vollbild 45₂ wird als neues Vorgängerbild im Dekoder-Zwischenspeicher 46 abgelegt und zusätzlich ausgegeben. Als Ausgabemedium wird in der Regel der dem ersten bzw. zweiten Rechner 4 bzw. 6 zugeordnete Monitor 5 und 7 verwendet.

Die Erfindung wurde in Bezug auf eine besondere Ausführungsform beschrieben. Es ist jedoch selbstverständlich das Änderungen und Abwandlungen durchgeführt werden können, ohne dabei den Schutzbereich der nachstehenden Ansprüche zu verlassen.

### Bezugszeichenliste:

- 2: Mikroskop
- 4: erster Rechner
- 5: Bildschirm
- 6: zweiter Rechner
- 7: Bildschirm
- 8: Netzwerk
- 10: Motor
- 11: WAN-Modul
- 12: X/Y-Tisch
- 14: Objektträger
- 14a: Präparat
- 16: Kamera
- 17: Verbindung
- 18: weitere Verbindung
- 20: Eingabeeinheit
- 21: Kodierer
- 22₁: erster Ausgang
- 22₂: zweiter Ausgang
- 22₃: dritter Ausgang
- 24₁: ersten Eingang
- 25₁: erstes Vollbild
- 25₂: zweites Vollbild
- 26: Kodierelement
- 26₁: erster Eingang
- 26₂: zweiter Eingang
- 26₃: dritter Eingang
- 27: Zwischenspeicher
- 28: Steuerkanal
- 30: Steuerdatendekoder
- 30₁: erster Datenkanal
- 30₂: zweiter Datenkanal
- 32: Bild-Zusammensetzer
- 40: Dekoder
- 42: Steuerdatendekoder
- 44: Dekodereinheit
- 45₁: erstes dekodiertes Vollbild
- 45₂: zweites dekodiertes Vollbild
- 46: Dekoder-Zwischenspeicher
- 48: Bild-Zusammensetzer
- 100: Gewebeschnitt
- 102: erstes Bild
- 104: erster Aufnahmerahmen,
- 106: versetzter Aufnahmerahmen
- 108: schraffierte Fläche.
- 200: Vollbild
- 210: kodiertes Vollbild
- 210₁: Teilbild
- 210₂: Teilbild
- 220: kodiertes Teilbild
- 240: schraffierte Fläche

## Patentansprüche

1. Verfahren zur Kodierung von Livebildern in der Mikroskopie **gekennzeichnet durch** die folgenden Schritte:
a) Aufnehmen eines ersten Vollbildes (25₁), das einen Ausschnitt aus einem mikroskopischen Präparat (14a) darstellt;
b) Erzeugen eines ersten kodierten Vollbildes (200) in einem Kodierelement (21);
c) Speichern des ersten kodierten Vollbildes in einem Zwischenspeicher (27);
d) Ausgeben des ersten kodierten Vollbildes (25₁),
e) Aufnehmen eines zweiten Vollbildes (25₂), das bezüglich des vorangegangenen Vollbildes in einer **durch** einen X/Y-Tisch (12) definierten Ebene versetzt ist;
f) Übergeben der Koordinaten der Ausschnitts des zweiten Vollbildes (25₂) und weiterer Steuerdaten an einen Steuerdatendekoder (26)
g) Erzeugen von mindestens einem kodierten Teilbild unter Heranziehung der Daten vom Steuerdatendekoder (30),
h) Erzeugen eines zusammengesetzten und kodierten Vollbildes (210) in einem Bild-Zusammensetzer (32), wobei das mindestens eine kodierte Teilbild (220) und das im Zwischenspeicher (27) befindliche vorangegangene kodierte Vollbild verwendet werden,
i) Ausgeben eines zweiten zusammengesetzten und kodierten Vollbildes (210), wobei das zusammengesetzte und kodierte Vollbild (210) zusätzlich auch im Zwischenspeicher (27) abgelegt wird, und
j) Aufnehmen weiterer Bilder wobei für jedes weitere Bild die Schritte f bis i wiederholt werden.

2. Verfahren nach Anspruch 1, **dadurch gekennzeichnet,** das der Kodierer (21) drei Ausgabeformen a) Vollbilder vollständig kodiert, b) Vollbilder aus kodierten Teilbildern zusammengesetzt und c) Teilbilder kodiert für die Ausgabe der kodierten Bilder zur Verfügung stellt, und dass die Bildinformation zusätzlich Information über die Kodierung und die Lage des Bildes im Gesamtbild enthält.

3. Verfahren nach Anspruch 1, **dadurch gekennzeichnet, dass** kodierte Vollbilder (200, 210) an eine entfernte Station übertragen werden wobei in der entfernten Station ein dekodiertes Vollbild erzeugt wird.

4. Verfahren nach Anspruch 3, **dadurch gekennzeichnet, dass** mindestens ein kodiertes Teilbild an die entfernte Station übertragen wird, wobei in der entfernten Station ein zusammengesetztes dekodiertes Vollbild erzeugt wird.

5. Anordnung zur Kodierung von Video-Livebildern mindestens eines Mikroskops, **gekennzeichnet durch** einen Kodierer (21), an dem Vollbilder (25₁) übergebbar sind, wobei der Kodierer (21) aus einer Kodiereinheit (26) besteht, die mit einem Zwischenspeicher (27) verbunden ist, einem Steuerdatendekoder (30), der mit der Kodiereinheit (26), dem Zwischenspeicher (27) und einem Bild-Zusammensetzer (32) verbunden ist, und einem Bild-Zusammensetzer (32), der Daten von dem Zwischenspeicher (27) empfängt und Daten an den Zwischenspeicher (27) übergibt.

6. Anordnung nach Anspruch 5, **dadurch gekennzeichnet, dass** vom Zwischenspeicher (27) kodierte Vollbilder und kodierte Teilbilder ausgebbar sind, und dass von Bild-Zusammensetzer (32) zusammengesetzte und kodierte Vollbilder (210) ausgebbar sind.

7. Anordnung nach Anspruch 5, **dadurch gekennzeichnet, dass** ein Dekoder (40) vorgesehen ist, der vom Kodierer (21) räumlich getrennt angeordnet ist, und dass der Dekoder (40) kodierte Teilbilder (220) und kodierte Vollbilder (200) empfängt und daraus dekodierte Vollbilder (45₁) und zusammengesetzte und dekodierte Vollbilder (45₂) erzeugt.

8. Anordnung nach Anspruch 7, **dadurch gekennzeichnet, dass** der Dekoder (40) einen Steuerdatendekoder (42), der die entsprechenden Positions- und/oder Steuerdaten aus dem empfangenen kodierten Vollbild (200) oder Teilbild (220) ermittelt, eine Dekodereinheit (44) einen Bild-Zusammensetzer (48) und einen Dekoder-Zwischenspeicher (46) umfasst.
